**Europäisches Patentamt**

**European Patent Office**

**Office européen des brevets**

(19)

(11) Veröffentlichungsnummer: **0 151 306**
**B1**

(12) ## EUROPÄISCHE PATENTSCHRIFT

(45) Veröffentlichungstag der Patentschrift:
08.02.89

(51) Int. Cl.⁴: **G 21 C 19/40**

(21) Anmeldenummer: 84116122.7

(22) Anmeldetag: 21.12.84

(54) Verfahren zur Einhaltung der Unterkritikalität von Brennelementen.

(30) Priorität: 03.02.84 DE 3403780

(43) Veröffentlichungstag der Anmeldung:
14.08.85 Patentblatt 85/33

(45) Bekanntmachung des Hinweises auf die Patenterteilung:
08.02.89 Patentblatt 89/6

(84) Benannte Vertragsstaaten:
BE CH DE FR GB LI SE

(56) Entgegenhaltungen:
EP-A- 0 002 227
EP-A- 0 061 043
FR-A- 1 460 558

(73) Patentinhaber: TNH Transporte und Dienstleistungen Abwicklungsgesellschaft mbH,
Postfach 11 00 30 Rodenbacher Chaussee 6,
D-6450 Hanau 11 (DE)

(72) Erfinder: Christ, Richard, Dr.-Ing.,
August-Bebel-Strasse 20, D-6454 Bruchköbel (DE)

ACTORUM AG

## Beschreibung

Die Erfindung betrifft ein Verfahren zur Einhaltung der Unterkritikalität von Brennelementen für Leichtwasserreaktoren, bestehend aus Brennstäben, die rasterförmig in Brennstabreihen mittels Abstandshalter angeordnet sind, während des Transportes und der Lagerung.

Brennstoffelemente für Leichtwasserreaktoren bestehen aus einem Bündel von Brennstoffstäben, wobei die Stäbe ein quadratisches Raster bilden. Stirnseitig sind Formstücke zur Hantierung der Elemente angeordnet. Über die Länge des Stabbündels verteilt sorgen Abstandshalter für die Einhaltung der Abstände der einzelnen Stäbe untereinander.

Aufgrund des Kernbrennstoffgehaltes der Elemente sind bei Transport und Lagerung Massnahmen zur Sicherung der Unterkritikalität erforderlich, insbesondere wenn aus wirtschaftlichen Gründen eine Vielzahl von Brennstoffelementen auf engem Raum angeordnet werden müssen. Zur Sicherung der Unterkritikalität werden Neutronengifte, d.h. Materialien mit hohem Einfangquerschnitt für thermische Neutronen, eingesetzt.

Solche Neutronengifte sind besonders wirksam, wenn sie möglichst homogen verteilt innerhalb der Brennstoffansammlung eingesetzt werden können. Dieser Vorgehensweise sind jedoch bei dem Transport und der Lagerung Grenzen gesetzt.

Es ist bekannt, die Unterkritikalität einer Anordnung von Brennstoffelementen durch die Anordnung von Vergiftungsmaterial zwischen den einzelnen Brennelementen sicherzustellen. Beispielsweise wird dieser Weg bei den sogenannten Kompaktlagergestellen und bei Einsatzkörben für Transport- und Lagerbehälter beschritten. Nachteilig ist hierbei, dass das Neutronengift nur teilweise wirksam wird, da es nicht innerhalb eines Brennelementes, sondern nur zwischen benachbarten Brennelementen wirksam wird, und zudem ein zusätzliches Transport- und Lagervolumen darstellt.

Weiterhin ist bekannt, bei Druckwasserelementen die Regelstabführungsrohre, die während des Reaktorbetriebes für das Einfahren von Steuerstäben vorgesehen sind, bei Handhabung und Lagerung für die Aufnahme von Vergiftungsmaterial zu nutzen (EP-A-0 061 043). Hierbei nähert man sich dem angestrebten Ziel, das Neutronengift möglichst homogen innerhalb des Brennelementes anzuordnen. Allerdings sind auch mit diesem Verfahren Nachteile verbunden. So ist es nicht möglich, die Regelstabführungsrohre zur Aufnahme von Neutronengift zu benutzen, wenn ein abgebranntes Brennelement zusammen mit darin befindlichen, verbrauchten Steuerstäben transportiert oder gelagert werden soll, was häufig in der Praxis vorkommt. Überhaupt nicht anwendbar ist diese Methode bei Siedewasserelementen, da diese keine Regelstabführungsrohre aufweisen.

Es war daher Aufgabe der vorliegenden Erfindung ein Verfahren zur Einhaltung der Unterkritikalität von Brennelementen für Leichtwasserreaktoren, bestehend aus Brennstäben, die rasterförmig in Brennstabreihen mittels Abstandshalter angeordnet sind, während des Transports und der Lagerung zu finden, das eine kompakte, platzsparende Anordnung der Brennelemente bei möglichst homogener Vergiftung gestattet.

Diese Aufgabe wurde erfindungsgemäss dadurch gelöst, dass eines oder mehrere Neutronengift enthaltende Bleche von den Längsseiten der Brennelemente aus in die Spalte zwischen die Brennstabreihen geschoben werden, wobei die Breite der Bleche das Kantenmass der Brennelemente und die Länge der Bleche den Abstand zwischen benachbarten Abstandshaltern nicht überschreiten.

Die Bleche bestehen vorzugsweise aus borhaltigem Edelstahl.

Die Blechdicke hängt vom erforderlichen Vergiftungsgrad ab. Die maximale Dicke ist durch den Abstand zwischen den Stäben der Brennstabbündel begrenzt. Bei unbestrahlten Brennelementen kann es zweckmässig sein, die Oberfläche der Bleche mit einem Kunststoffüberzug zu versehen, um ein Zerkratzen der Brennstoffstäbe beim Einschieben der Bleche zu vermeiden.

Es ist wichtig, die Breite der Bleche auf die maximalen Querschnittsabmessungen zu beschränken, damit die Bleche die Brennelementkontur nicht überschreiten. Die Länge der Bleche richtet sich nach dem Abstand der Abstandshalter des Brennelementes.

Je nach dem Grad der erforderlichen Vergiftung können ein oder mehrere Bleche eingeschoben werden. Ferner ist es möglich, die erfindungsgemässe Art der Vergiftung mit anderen bekannten Methoden zur Erhaltung der Unterkritikalität zu kombinieren.

Eine Ausgestaltung der Erfindung besteht darin, zur Vereinfachung der Montage mehrere Bleche an ihren Längsseiten mit einem Steg zu verbinden.

Das erfindungsgemässe Verfahren eignet sich sowohl für unbestrahlte als auch für bestrahlte Brennelemente. Es soll anhand der Abbildungen I bis III und der Beispiele näher erläutert werden.

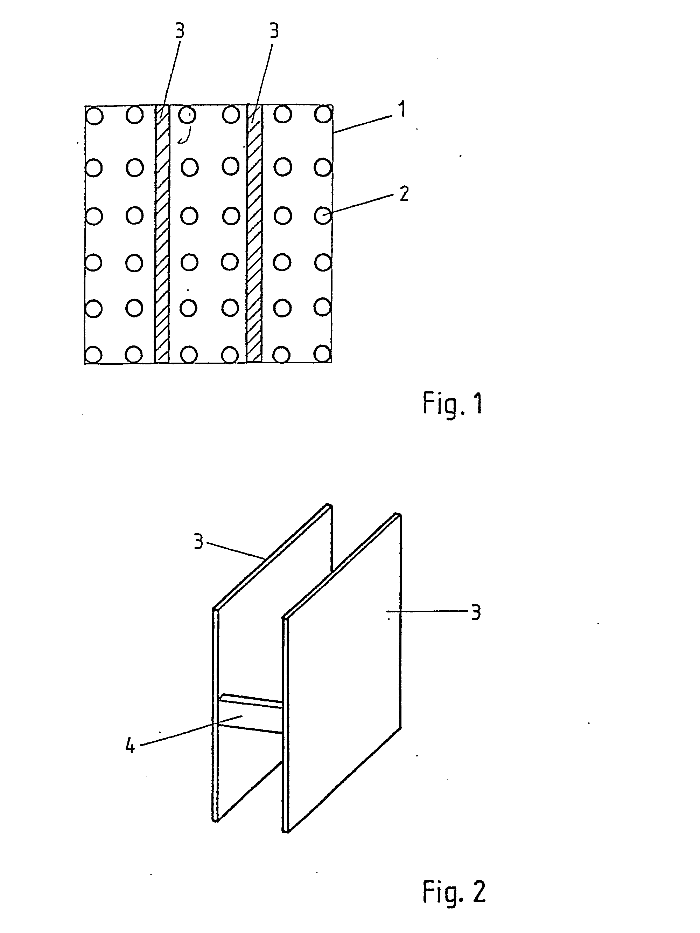

Abbildung 1 zeigt schematisch den Querschnitt eines Brennelementes 1, bestehend aus einer Vielzahl von Brennstäben 2 in einem quadratischen Raster. Zwischen den Brennstabreihen sind Bleche 3 eingeschoben.

Die Abbildung 2 zeigt Bleche 3, die mit einem Quersteg 4 versehen sind, zur Erleichterung des Einschiebens bzw. Herausziehens der Bleche aus den Brennstabreihen.

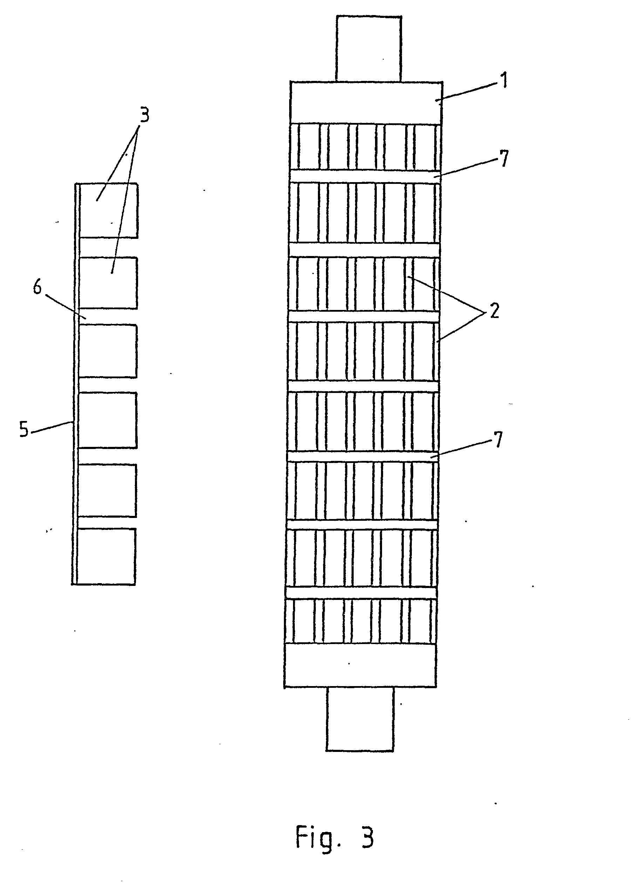

Abbildung 3 zeigt schematisch ein Brennelement 1, bestehend aus Brennstäben 2 und Abstandshaltern 7. Die Bleche 3 sind mit einer Schiene 5 verbunden, in der Art, dass im Bereich der Abstandshalter 7 Aussparungen 6 bestehen.

## Beispiel 1

Siedewasserelemente bestehen typischerweise aus einem Bündel von 8 × 8 Brennstäben in quadratischer Anordnung mit jeweils 7 Abstandshaltern. Die Stäbe haben einen Durchmesser von 12,5 mm, der Abstand zwischen benachbarten Stäben beträgt 3,75 mm. In diese Brennelemente werden jeweils zwei Vergiftungsbleche mit 2,5 mm Stärke zwischen jeweils zwei Abstandshalter eingeschoben, wobei die Bleche aus Edelstahl mit einem Gehalt von 1,2% Bor bestehen. Die Blechabmessungen betragen 138 × 470 mm, entsprechend den Abmessungen der Brennelemente und des Abstandes der Abstandshalter voneinander. Die Bleche sind zwischen die 2. und 3. bzw. zwischen die 6. und 7. Brennstabreihe des Brennelementes eingeschoben. Zwischen den 7 Abstandshaltern sind also 6 × 2 Bleche der angegebenen Grösse eingeschoben, die insgesamt die Unterkritikalität der Brennelemente garantieren.

Die Bleche können auch so miteinander verbunden sein, dass alle 6 Bleche, die zwischen zwei Brennstabreihen stecken, eine Einheit bilden, unter Aussparung der Abstandshalterbereiche, und dadurch als Ganzes eingeschoben und herausgezogen werden können (Abb. III).

Beispiel 2

Druckwasserelemente bestehen aus Bündeln von 17 × 17 Brennstäben in quadratischer Anordnung mit 7 Abstandshaltern. Der Brennstabdurchmesser beträgt 9,5 mm, der Abstand zwischen benachbarten Stäben 3,1 mm, der Abstand zwischen benachbarten Abstandshaltern 500 mm. In dieses Brennelement werden vier Reihen von jeweils 6 Blechen zwischen benachbarte Brennstabreihen eingeschoben. Die Bleche haben eine Abmessung von 500 × 115 × 2 mm und bestehen aus Borstahl mit 0,7% Bor.

**Patentansprüche**

1. Verfahren zur Einhaltung der Unterkritikalität von Brennelementen für Leichtwasserreaktoren, bestehend aus Brennstäben, die rasterförmig in Brennstabreihen mittels Abstandshalter angeordnet sind, während des Transports und der Lagerung, dadurch gekennzeichnet, dass ein oder mehrere Neutronengift enthaltende Bleche von den Längsseiten der Brennelemente aus in die Spalte zwischen die Brennstabreihen geschoben werden, wobei die Breite der Bleche das Kantenmass der Brennelemente und die Länge der Bleche den Abstand zwischen benachbarten Abstandshaltern nicht überschreiten.

2. Verfahren nach Anspruch 1, dadurch gekennzeichnet, dass die Bleche aus borhaltigem Edelstahl bestehen.

**Claims**

1. Method of maintaining the subcriticality of fuel assemblies for light water reactors, consisting of fuel rods which are arranged in fuel rod rows in the form of a grid by means of spacers, during transport and storage, characterized in that one or more sheets containing neutron poison are inserted from the longitudinal side of the fuel assemblies into the gaps between the fuel rod rows, the width of the sheets not exceeding the edge dimension of the fuel assemblies and the length of the sheets not exceeding the distance between neighbouring spacers.

2. Method according to Claim 1, characterized in that the sheets consist of boron-containing stainless steel.

**Revendications**

1. Procédé pour le maintien de la sous-criticalité d'éléments combustibles pour les réacteurs à eau légère, consistant en barreaux de combustible qui sont disposés en séries de barreaux de combustible au moyen d'intercalaire pour former un réseau, pendant le transport et le magasinage, caractérisé en ce qu'une ou plusieurs tôles contenant un poison pour neutrons sont intercalées à partir des grands côtés des éléments combustibles vers l'extérieur dans la fente entre les séries de barreaux de combustible, pour lesquelles la largeur des tôles ne dépasse pas la mesure de l'arête des éléments combustibles et la longueur de la tôle, l'espace entre les intercalaires voisins.

2. Procédé selon la revendication 1, caractérisé en ce que les tôles sont constituées d'acier spécial contenant du bore.

Fig. 1

Fig. 2

Fig. 3